## Europäisches Patentamt

## European Patent Office

## Office européen des brevets

(19)

(11) Veröffentlichungsnummer: **0 032 250**
**B1**

(12) # EUROPÄISCHE PATENTSCHRIFT

(45) Veröffentlichungstag der Patentschrift:
**18.07.84**

(21) Anmeldenummer: **80108255.3**

(22) Anmeldetag: **30.12.80**

(51) Int. Cl.³: **G 09 B 25/04,** G 09 B 23/16, G 09 F 19/10

(54) **Modellhaus.**

(30) Priorität: **14.01.80 DE 3001086**

(43) Veröffentlichungstag der Anmeldung:
**22.07.81 Patentblatt 81/29**

(45) Bekanntmachung des Hinweises auf die Patenterteilung:
**18.07.84 Patentblatt 84/29**

(84) Benannte Vertragsstaaten:
**AT BE CH DE FR GB IT LI LU NL SE**

(56) Entgegenhaltungen:
**FR - A - 2 357 018**
**US - A - 2 172 229**
**US - A - 2 296 815**
**US - A - 2 326 194**
**US - A - 4 095 454**
**US - A - 4 152 847**

(73) Patentinhaber: **Grünzweig + Hartmann und Glasfaser AG, Bürgermeister-Grünzweig-Strasse 1-47, D-6700 Ludwigshafen am Rhein (DE)**

(72) Erfinder: **Petersen, Klaus, Leiningerstrasse 33, D-6719 Bobenheim (DE)**

(74) Vertreter: **KUHNEN & WACKER Patentanwaltsbüro, Schneggstrasse 3-5 Postfach 1729, D-8050 Freising (DE)**

## Beschreibung

Die Erfindung betrifft ein Modellhaus, insbesondere ein vertikal geschnittenes Modellhaus, nach dem Oberbegriff des Anspruchs 1.

Ein derartiges Modellhaus ist aus der US-A-2 326 194 bekannt. Hierbei wird in das allseitig geschlossenwandig ausgebildete Modellhaus eine Wärmequelle eingeführt, die durch die Umgrenzungswand des Modellhauses hindurch Wärme an die Umgebung abgibt. Der Dach- und seitliche Wandbereich des Modellhauses ist doppelwandig ausgeführt und dient zur selektiven Aufnahme von Elementen aus unterschiedlichen Wärmedämmaterialien zu beiden Seiten der Längsmittelebene des Hauses. Auf jeder Dachschräge ist als Fühler ein Thermometer installiert. Wird die Wärmequelle im Inneren des Modellhauses in Betrieb genommen, so ergeben sich je nach den Wärmedämmelementen für die verwendeten Elemente zu beiden Hausseiten unterschiedliche Ansprechgeschwindigkeiten der Thermometer auf den Dachschrägen. Hierdurch kann sinnfällig demonstriert werden, welcher Wärmedämmstoff welche Wärmedämmwirkung erzeugt.

Nachteilig ist hierbei zunächst, daß für jede Haushälfte ein einstückiges, abgewinkeltes Wärmedämmelement für den Dachbereich und seitlichen Wandbereich der Umgrenzungswand verwendet wird, während der Bodenbereich gänzlich ungedämmt bleibt. Hieraus läßt sich im Grunde — praktisch unabhängig von spezifischen Gegebenheiten des Hausbaus — lediglich ein Indiz dafür ableiten, welches Wärmedämmaterial welche grundsätzliche Wirksamkeit besitzt. Es liegen hier also die Verhältnisse im Prinzip nicht anders als bei einer aus der US-A-4 152 847 bekannten Testvorrichtung für Laborzwecke, bei der zwischen zwei Kammern Wechselelemente aus unterschiedlichen Wärmedämmaterialien in eine Nutführung eingeschoben werden können, und ausgemessen wird, wie der Wärmedurchlaßwiderstand jedes derartigen Wechselelementes aus unterschiedlichen Wärmedämmstoffen ist. In beiden Fällen wird somit im Grunde nur die spezifische Wärmedämmwirkung eines bestimmten Wärmedämmaterials veranschaulicht.

Bekanntlich tragen jedoch der Dachbereich, der durch Fenster unterbrochene seitliche Wandbereich und der Bodenbereich eines Hauses insbesondere bei Unterkellerung in erheblich unterschiedlichem Umfange zu Wärmeverlusten des Hauses insgesamt bei. Daher werden die jeweiligen Dämmaßnahmen im Dachbereich, Wandbereich und Bodenbereich zweckmäßigerweise unterschiedlich ausfallen, und besitzen die Dämmaßnahmen an den entsprechenden Stellen unterschiedliche Auswirkungen auf den Gesamt-Wärmehaushalt des Hauses. Dabei wird in der Praxis — auch aus konstruktiven Gründen — im Dachbereich, im seitlichen Wandbereich und im Bodenbereich mit unterschiedlichen und damit unterschiedlich wirksamen Wärmedämmstoffen gearbeitet, die überdies in unterschiedlichen Dicken zum Einsatz gelangen.

Derartige Verhältnisse können bei einem gattungsgemäßen Modellhaus nach der US-A-2 326 194 nicht simuliert werden, da hier nur die Möglichkeit besteht, im Wandbereich und Dachbereich ein bestimmtes Wärmedämmaterial gleicher Dicke durchgehend anzuordnen, ein Fall, der in der Praxis niemals vorkommt.

Insgesamt also hat die Ausbildung des Modells in der Umrißform eines Hauses im Falle der US-A-2 326 194 keinerlei technische Bedeutung, da im Grunde lediglich der materialspezifische Wärmedurchlaßwiderstand des gewählten Wärmedämmaterials demonstriert wird, was ebensogut in einer Laboranordnung etwa gemäß der US-A-4 152 847 erfolgen könnte. Weiterhin wird auch nur im Dachbereich an einer Stelle eine Temperatur gemessen, die keineswegs kennzeichnend für die Wirksamkeit von Dämmaßnahmen an anderen Stellen des Hauses und insbesondere nicht für den Gesamt-Wärmehaushalt des Hauses ist. Die Ausbildung des Modells der US-A-2 326 194 als Haus hat also lediglich den psychologischen Zweck, den Hausbesitzer für die Problematik der Wärmedämmung an sich zu interessieren, ohne ihm aber irgendwelche Einblicke in die Wirksamkeit spezieller Dämmaßnahmen im Dachbereich, im seitlichen Wandbereich und im Bodenbereich des Hauses zu geben.

Weiterhin ist in erheblichem Umfange nachteilig, daß die jeweiligen, ein Bau- oder Wärmedämmaterial darstellenden Elemente im Falle der US-A-2 326 194 tatsächlich aus dem entsprechenden Material bestehen müssen, wenn das Demonstrationsmodell funktionieren soll. Dies ist einerseits nachteilig, da sich eine Reihe von Wärmedämmaterialien wie etwa auch Mineralfasern wenig für eine dauernde Handhabung am Modell eignen. Weiterhin ist nachteilig, daß durch die gegenüber der natürlichen Größe erheblich verringerten Maßstäbe am Modell auch keine unmittelbar übertragbaren Ergebnisse erzielt werden können, da beispielsweise bei einer Verringerung der Dämmdicke eines bestimmten Wärmedämmaterials beispielsweise um den Faktor 100 die Wärmeübergangsbedingungen sich unkontrolliert, und keineswegs proportional im selben Faktor ändern.

Demgegenüber liegt der Erfindung die Aufgabe zugrunde, ein Modellhaus der im Oberbegriff des Anspruchs 1 angegebenen Gattung zu schaffen, mit dem anschaulich gemacht werden kann, wie sich die Gesamt-Wärmedämmung des tatsächlichen Hauses ändert, wenn selektiv für die Wände, das Dach und/oder den Boden unterschiedliche Dämmaßnahmen ergriffen, also unterschiedliche Materialien in unterschiedlichen Anordnungen wie etwa Dicken verwendet werden.

Die Lösung dieser Aufgabe erfolgt durch die kennzeichnenden Merkmale des Anspruchs 1.

Dadurch, daß jedes Element eine dem darzustellenden Material oder seiner Anordnung entsprechende Kodierung trägt, kann für den Körper des Elementes eine für die Handhabung am Modell zweckmäßige Formgestaltung und Materialwahl getroffen werden, unabhängig davon, welches Dämmaterial damit symbolisiert werden soll. Die betreffende Information über die Wirksamkeit des Dämmaterials an dieser Stelle wird somit nicht dadurch erreicht, daß tatsächlich ein solches Dämmaterial angeordnet wird, sondern daß am Modell eine selektive Informationseingabe erfolgt, von welchem Material an welcher Stelle und in welcher Anordnung ausgegangen werden soll. Diese Information wird von an den entsprechenden Stellen angeordneten Fühlern einzeln erfaßt und in geeigneter Weise in eine integrierte Anzeige über den Gesamt-Wärmedämmwert des Hauses umgesetzt. Damit kann also etwa ein Messebesucher aus einer Vielzahl von Elementen auswählen, die unterschiedliche Dämmstoffe und/oder Baustoffe in gängigen oder sinnvollen Dickenabstufungen symbolisieren und kann für den Ausbau oder die Dämmung der Wände, der Decke und des Bodens ihm sinnvoll oder zweckmäßig erscheinende Kombinationen auswählen. Sobald der Messebesucher die ausgewählten Elemente an den gewünschten Stellen einsetzt, wird dort nicht etwa tatsächlich eine entsprechende Dämmung erzeugt, sondern lediglich ein Informationssignal über die vom Fühler abgefaßte Kodierung erzeugt, welcher Fall nun zu simulieren ist. Auf diese Weise erhält eine Umsetzungseinrichtung der Information in die Anzeige, sei es ein Prozeßrechner oder ein vorprogrammierter Festwertspeicher, fast wie über eine Dateneingabetastatur die Information, von welchen Dämmstoffen und Dämmstoffanordnungen im Dachbereich, im Wandbereich und/oder im Bodenbereich nunmehr auszugehen ist, und erzeugt anhand vorprogrammierter Festwerte oder anhand vorprogrammierter Rechenoperationen synthetisch eine Anzeige, beispielsweise welcher sogenannte k-Wert des Gesamthauses oder welcher Heizölverbrauch pro Jahr sich im Falle einer solchen Ausstattung eines tatsächlichen Hauses — nicht des Modellhauses — ergibt. Durch geeigneten Wechsel einzelner Elemente kann der Messebesucher ohne weiteres untersuchen, wie sich die Gesamt-Wärmedämmung jeweils ändert. Hierdurch kann beispielsweise sinnfällig gemacht werden, daß mit Bezug auf die Wand des Hauses die Wandbausteine nur eine sehr begrenzte Wirkung auf die Energieeinsparung haben, sofern zusätzliche Wärmedämmschichten etwa aus Mineralfaserlagen verwendet werden, da deren Wärmedämmwert denjenigen der Wandbausteine um Größenordnungen übersteigt. Andererseits kann augenfällig gemacht werden, ob und gegebenenfalls welche Unterschiede in der Amortisation einer Dämminvestition im Dachbereich, im Wandbereich und im Bodenbereich des Hauses bestehen. All dies erfährt der Messebesucher gewissermaßen aus eigener Anschauung, indem er verschiedene Kombinationen von Bausteinen und Wärmedämmschichten für die Wände und gegebenenfalls auch für das Dach und/oder den Boden ausprobiert und die sich jeweils ergebende Anzeige für die Gesamt-Wärmedämmung des Hauses betrachtet. Daher kann der Messebesucher gewissermaßen spielerisch und insbesondere anschaulich an die relativ komplexen Einflüsse bestimmter Wärmedämmschichten an verschiedenen Stellen der Umgrenzungswand des Hauses auf den Gesamt-Wärmedämmwert des Hauses herangeführt werden.

Für die Umsetzung der Kodierung der einzelnen Elemente in eine Anzeige kommen verschiedene Möglichkeiten grundsätzlich in Betracht. Dabei sind auch Versuche mit einem Prozeßrechner gemacht worden, der anhand der Kodierung der einzelnen Elemente erkennt, welche Variablen zur Berechnung des Gesamt-Wärmedämmwertes im gegebenen Fall zu verwenden sind, um anhand eines eingegebenen Rechenprogrammes dessen Berechnung durchzuführen und zur Anzeige zu bringen. Es hat sich jedoch gezeigt, daß diese gedanklich nächstliegende Lösung mit erheblichen Nachteilen behaftet ist. Abgesehen vom anlagentechnischen Aufwand für den Prozeßrechner ergeben sich nämlich Schwierigkeiten bei der Auswechselung von Elementen, wenn Flatterkontakte oder auch nur flüchtige Anbringung keine korrekte Abfühlung der Kodierung ermöglichen. In all diesen Fällen erhält der Prozeßrechner ständig Kodierungskombinationen und wertet diese aus, obwohl sie zu falschen oder nicht benötigten, weil sinnlosen Ergebnissen führen. Wenn beispielsweise das eine Mauerwand symbolisierende Element herausgenommen wird, um es durch ein anderes zu ersetzen, so erhält der Rechner eine Kodierungskombination entsprechend einer lediglich aus der Wärmedämmschicht bestehenden Wand und ermittelt sofort die zugehörige Anzeige, was nur verwirrt, da eine solche Berechnung praktisch ja sinnlos ist. Dabei benötigt der Prozeßrechner, wenn der Aufwand hierfür nicht unsinnig hochgetrieben werden soll, eine nicht unerhebliche Zeit von beispielsweise 15 Sekunden zur Ermittlung eines Ergebnisses aus der empfangenen Kodierungskombination, so daß etwa bei einem Umbau sinnlose Ergebnisse gemischt mit den gewünschten Ergebnissen zeitverzögert angezeigt werden, was den Effekt der Anschaulichkeit des Modellhauses in gewissem Umfange wieder zunichte macht. Besondere Pufferschaltungen zur Vermeidung dieser Nachteile sind zwar grundsätzlich denkbar, jedoch vom Aufwand her nicht wirtschaftlich.

In besonders bevorzugter Ausgestaltung der Erfindung ist daher gemäß Anspruch 2 vorgesehen, daß anstelle eines solchen Prozeßrechners ein Festwertspeicher verwendet wird. Diesem Festwertspeicher werden die sich jeweils ergebenen Kodierungskombinationen mittels der Fühler als Adressensignale zugeführt. Im Festwertspeicher sind aber nur für solche Adressensignale Anzeigen zugeordnet, die einer tatsächlich sinvollen Baustoff- bzw. Dämmschichtkombination entsprechen. Für solche sinnvolle Kodierungskombinationen ist das Ergebnis der Anzeige vorausberechnet und als Festwert eingegeben, der durch das dieser Kombination entsprechende Adressensignal ausgelöst und ohne jegliche Zeitverzögerung sofort zur Anzeige gebracht wird. Solange also der Festwertspeicher etwa während eines Umbaus nur Kodierungskombinationen erhält, die kein einem gespeicherten Festwert entsprechendes Adressensignal ergeben, erfolgt entweder überhaupt keine Reaktion des Speichers und bleibt das vorherige Ergebnis angezeigt, oder erfolgt eine Nullanzeige, die deutlich macht, daß im Moment keine Ermittlung der gewünschten Kennwerte erfolgt. Unsinnige Anzeigen sind damit sicher ausgeschlossen. Neben den funktionellen Vorteilen einer sofortigen Anzeige ohne Zeitverzögerung ergeben sich durch den Festwertspeicher darüber hinaus die Vorteile einer äußerst geringen Störanfälligkeit und insbesondere auch geringerer Gestehungskosten.

Eine Verringerung der Störanfälligkeit, die insbesondere bei Demonstrationen auf Messen od. dgl. von besonderer Bedeutung ist, ergibt sich auch durch die Merkmale der Ansprüche 4 bis 6, wonach anstelle an sich denkbarer berührungsfreier Fühler, Magnetfühler usw. als mechanische Schalter ausgebildete Fühler verwendet werden, die beim Einsetzen oder Einschieben der Elemente formschlüssig betätigt werden und so eine sichere und eindeutige Schaltung und Kodierungskombination ohne Gefahr von Flatterkontakten ergeben.

Weitere Einzelheiten, Merkmale und Vorteile der Erfindung ergeben sich aus der nachfolgenden Beschreibung einer Ausführungsform anhand der Zeichnung. Es zeigt

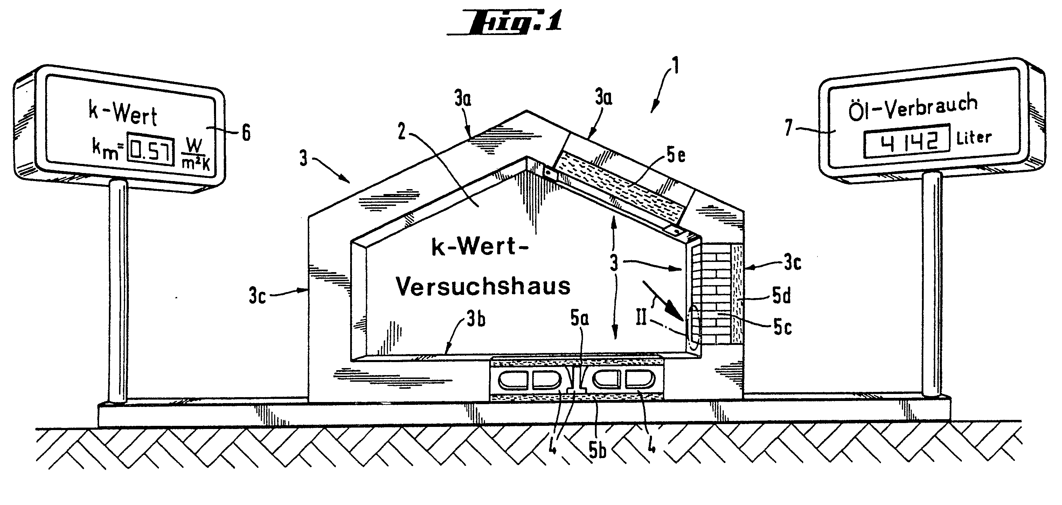

Fig. 1 eine Gesamtansicht eines erfindungsgemäßen Modellhauses und

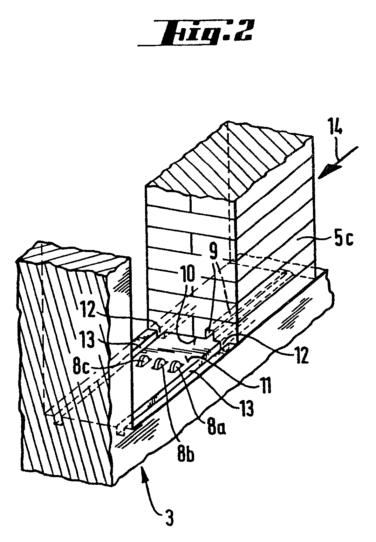

Fig. 2 eine Einzelheit im räumlich dargestellten Kreis II in Fig. 1 aus Blickrichtung des Pfeiles II in Fig. 1 gesehen.

Wie die Zeichnung veranschaulicht, besteht das insgesamt mit 1 bezeichnete Modellhaus aus einer den Hausinnenraum 2 umschließenden Umgrenzungswand 3, die im Oberteil ein im Beispielsfalle giebelförmiges Dach 3a, im Unterteil einen Boden 3b und dazwischen seitliche Wände 3c des Modellhauses 1 symbolisiert. Im Beispielsfalle möge die durch den Boden 3b gebildete Kellerdecke feststehend als Hohlkörper mit schwimmendem Estrich angenommen sein, wie dies durch die modellfesten, ebenso wie der Rest der Umgrenzungswand hölzernen Modellbauteile 4 veranschaulicht ist. An der Oberseite der Kellerdecke oder des Bodens 3b ist ein Element 5a anordenbar, welches eine Estrich-Dämmplatte veranschaulichen soll, während an der Unterseite ein Element 5b angeordnet werden kann, welches eine für diese Einbaulage geeignete Dämmschicht symbolisiert.

An einer Seite ist die Wand 3c des Modellhauses 1 mit einer Öffnung versehen, in die in der veranschaulichten Weise ein Element 5c eingeschoben werden kann, welches den Rohbaustoff für die Wand, etwa Kalksandstein, Leichtziegel oder Gasbeton veranschaulicht, und an dessen Außenseite ein Element 5d angesetzt werden kann, welches eine für diese Einbaulage geeignete Dämmschicht insbesondere aus Mineralfaserwolle symbolisiert. An einer Seite des Daches 3a ist eine entsprechende Öffnung freigelassen, in die in der veranschaulichten Weise ein Element 5e eingesetzt werden kann, welches eine Wärmedämmschicht unterhalb der Dachhaut symbolisiert, die ebenfalls etwa aus Mineralfaserwolle bestehen kann. Sämtliche Elemente 5a bis 5e sind abnehmbar und durch andere Elemente ersetzbar, die unterschiedliches Material oder unterschiedliche Dicke symbolisieren. So können insbesondere im Bereich der Seitenwand 3c die Elemente 5c und 5d in unterschiedlichen, zusammenpassenden Dicken und insbesondere etwa hinsichtlich des Elementes 5c in unterschiedlichen Rohbaustoffen gewählt werden, um so beliebige, jedoch nicht unsinnige Kombinationen für den Aufbau und die Wärmedämmschichten im Bereich des Daches 3a, der Wände 3c und des Bodens 3e zu veranschaulichen, wobei die Materialdicken der Elemente 5a bis 5e natürliche Größe haben. Jede sinnvolle Kombination der austauschbaren Elemente 5a bis 5e führt in weiter unten noch näher erläuterten Weise zur Anzeige des Gesamt-Wärmedämmwertes des Modellhauses, wobei etwa an einer Anzeige 6 der sog. k-Wert und an einer Anzeige 7 der Ölverbrauch für eine Heizperiode angezeigt werden kann. Hierzu wird für jede der vorgesehenen Kombinationen von Rohbaustoffen für die Wand 3c bzw. die Elemente 5c und Materialdicken für die Elemente 5a bis 5e der sich ergebende k-Wert und der Ölverbrauch im voraus berechnet, etwa auf der Rechengrundlage eines 1½geschossigen Wohnhauses mit 150 m² Grundfläche und 30% Fensteranteil. Wenn somit durch die austauschbaren Elemente 5a bis 5e, wie im vorliegenden Beispielsfall, 96 mögliche Kombinationen vorliegen, in denen diese Elemente sinnvoll kombiniert werden können, so wird für die sich dabei ergebenden 96 Kombinationen für Eingangsgrößen in die Rechnung im vorhinein die erforderliche Berechnung durchgeführt, wozu ein leistungsfähiger stationärer Computer unabhängig von dessen Standort verwendet werden kann. Damit wird jeder der 96 Kombinationen eine spezielle Anzeige, im Beispielsfalle des k-Wertes und des Ölverbrauches, zugeordnet, wobei sämtliche Eingangswerte der Rechnung bis auf die sich durch die unterschiedlichen Dicken und Materialien der Elemente 5a bis 5e ergebenden Eingangswerte konstant gehalten werden und so eine unmittelbare Vergleichbarkeit gewährleistet ist. Die so erhaltenen Rechenergebnisse werden in einem nicht näher dargestellten Festwertspeicher gespeichert, aus dem sie abgerufen werden können, wenn eine der im Beispielsfalle 96 Kombinationen vorliegt. Hierzu wäre es grundsätzlich möglich, jede der vorausberechneten Kombinationen mit einer Kennziffer, beispielsweise von 1 bis 96 zu belegen, und die jeweils gewählte Kombination im Festwertspeicher von Hand anzuwählen, so daß dieser die entsprechende Anzeige auslöst.

Da aber eine solche zusätzliche Einwirkung des Bedienungspersonals die Unmittelbarkeit der Abhängigkeit des Ergebnisses von der gewählten Elementenkombination beeinträchtigt, ist erfindungsgemäß vorgesehen, daß jedem der Elemente 5a bis 5e eine Kodierung zugeordnet ist, die beim Ansetzen oder Einschieben des Elementes an die vorgesehene Stelle des Modellhauses von einem geeigneten Fühler erfaßt wird, so daß die von sämtlichen Fühlern erfaßte Kodierungskombination ein Adressensignal für den Speicherplatz ergibt, auf dem das Anzeigeergebnis dieser Kombination als Festwert gespeichert ist.

Hierzu sind an geeigneter Stelle ortsfest im Modellhaus 1 mechanische Schalter angeordnet, die beim Einsetzen, Ansetzen oder Einschieben der Elemente 5a bis 5e von diesen selektiv derart betätigt werden, daß jedem Element eine bestimmte Kombination von Schalterstellungen zugeordnet ist und somit jedes Element an den zugeordneten Schalterstellungen erkennbar ist. Die Anzahl der jedem Element zugeordneten Schalter variiert dabei entsprechend der Anzahl der für diese Stelle vorgesehenen Auswechselelemente, wobei bei n Schaltern n Kombinationsmöglichkeiten vorliegen und damit eine entsprechende Anzahl von Wechselelementen bereitgehalten werden kann. Sind einem Element z. B. 5c drei Schalter zugeordnet, die jeweils in störungssicherer Weise nur von einem Schaltzustand zum anderen überführt werden können, so ergibt dies eine eindeutige Identifizierungsmöglichkeit für 3! auswechselbare Elemente, also für 6 Wechselelemente, während bei vier Schaltern bereits 24 Wechselelemente eindeutig identifizierbar sind, jeweils zuzüglich eines »Stamm«-Elementes, welches ursprünglich eingesetzt ist.

Hierzu sind in F i g. 2 drei mechanische Schalter 8a, 8b und 8c veranschaulicht, die mit einer entsprechenden, durch Nuten 9 gebildeten Kodierung an der Unterseite oder unteren Fläche 10 des Elementes 5c zusammenarbeiten und hierzu gebäudeseitig an der der Fläche 10 benachbarten Gegenfläche 11 der das Element 5c aufnehmenden Öffnung in der Umgrenzungswand 3 des Modellhauses 1 angeordnet sind. Das Element 5c ist im Beispielsfalle über Stege 12 in Führungsnuten 13 der Gegenfläche 11 geführt, jedoch ist die konstruktive Ausbildung dieser Führung ohne Bedeutung. Die Schalter 8a bis 8c ragen mit Rollen oder sonstigen Auflaufflächen aus der Oberseite der Fläche 11 beispielsweise 1 cm heraus und besitzen einen Schaltweg von beispielsweise wenigen Millimetern. Wenn daher die Fläche 10 an einer nicht mit einer Nut 9 versehenen Stelle beim Einschieben des Elementes 5c gemäß Pfeil 14 über die Schalter gleitet, wie dies im Beispielsfalle bezüglich der Schalter 8b und 8c der Fall ist, so werden die Schaltrollen od. dgl. niedergedrückt und die Schalter geschlossen. Wenn hingegen an der Stelle des Schalters, wie im Beispielsfalle beim Schalter 8a, eine Nut 9 vorgesehen ist, so übergreift diese die Schaltrolle des Schalters 8a, so daß dieser trotz des Einschubes des Elementes 5c nicht schaltet. Die Kodierung des in F i g. 2 dargestellten Elementes 5c wird somit dadurch bestimmt, daß der Schalter 8a offen und die Schalter 8b und 8c geschlossen sind. Dieses Steuersignal LLO identifiziert somit das in F i g. 2 beispielhaft veranschaulichte Element 5c, und in entsprechender Weise werden die übrigen Elemente 5a, 5b, 5d und 5e identifiziert, so daß dem Festwertspeicher eine Kodierungskombination zugeführt werden kann, die einer bestimmten Kombination spezieller Elemente 5a bis 5e entspricht. Ist diese Kodierungskombination als Adressensignal für einen der gespeicherten Festwerte vorgesehen, so wird dieser ausgelöst und ergibt die Werte für die Anzeigen 6 und 7. Dabei wird jedoch auf eine Ausbildung des Elementes 5c mit drei Nuten 9 verzichtet, welches also sämtliche Schalter 8a, 8b und 8c unberührt oder offenlassen würde, so daß dieser Zustand eines nicht eingesetzten Mauerstückes in Form des Elementes 5c als »unmöglicher« Zustand identifizierbar ist und keiner der gespeicherten Kodierungskombinationen entspricht, so daß diese unsinnige Kombination zu keiner Anzeige oder einer Nullanzeige führt, die stets dann aufleuchten kann, wenn keine brauchbare Kombination vorliegt. Die Schalter 8a bis 8c können dabei in einem ausreichenden Abstand von der eigentlichen Endstellung des Elementes 5c angeordnet werden, so daß auch bei flüchtigem Einsetzen des Elementes 5c nicht ganz bis zur Endstellung eine sichere Schaltung erfolgt. Die Nuten 9 können entsprechend weit nach hinten geführt sein, so daß in keinem Fall ein Überfahren eines der Schalter 8a bis 8c durch ein Ende der Nut erfolgen kann.

Insbesondere bei einer Vielzahl von im Beispielsfalle 96 Kombinationen ist bevorzugt ein mit Chips elektronisch arbeitender Festwertspeicher vorgesehen. Bei nur wenigen Kombinationsmöglichkeiten wäre auch eine elektromechanische Ausführung mit Schaltschützen und Relais grundsätzlich denkbar.

## Patentansprüche

1. Modellhaus, insbesondere vertikal geschnittenes Modellhaus, mit einer den Boden (3b), die Wand (3c) und/oder das Dach (3a) darstellenden, den Hausinnenraum umschließenden Umgrenzungswand (3), in die oder an die zum Demonstrieren der Gesamt-Wärmedämmung bzw. des Heizölbedarfs bestimmten Bau- und/oder Dämmstoffen entsprechende Elemente (5a bis 5e) ein- oder ansetzbar sind, und mit modellfest angeordneten Fühlern (8a bis 8c) zur Erzeugung einer Anzeige für wenigstens einen Kennwert der erzielten Wärmedämmung, dadurch gekennzeichnet, daß jedes Element (5a bis 5e) eine dem darzustellenden Material und/oder seiner Anordnung wie seiner Dicke entsprechende Kodierung (Nuten 9) trägt, die beim An- oder Einsetzen der Elemente (5a bis 5e) an oder in die Umgrenzungswand (3) im Bereich des Bodens (3b), der Wand (3c) und/oder des Daches (3a) von dem jeweils zugeordneten Fühler (8a bis 8c) erfaßbar sind, und daß die Kodierungsinformationen der jeweiligen Fühler (8a bis 8c) in eine Anzeige für wenigstens einen Kennwert der sich aus den jeweiligen unterschiedlichen Bau- und/oder Dämmstoffen oder deren Anordnungen ergebenden, kombinierten Gesamt-Wärmedämmung eines so gedämmten natürlichen Hauses umsetzbar sind.

2. Modellhaus nach Anspruch 1, dadurch gekennzeichnet, daß nur in der Praxis sinnvolle Zusammenstellungen der Elemente (5a bis 5e) eine Kodierungskombination ergeben, die in einem an die Fühler (Schalter 8a bis 8c) angeschlossenen Festwertspeicher vorprogrammiert ist und in diesem eine vorausberechnete Festwertanzeige für einen zugeordneten Kennwert der Gesamt-Wärmedämmung des Hauses auslöst.

3. Modellhaus nach Anspruch 2, dadurch gekennzeichnet, daß alle übrigen Kodierungskombinationen keine Anzeige oder eine Null- bzw. Fehleranzeige auslösen.

4. Modellhaus nach einem der Ansprüche 1 bis 3, dadurch gekennzeichnet, daß die Fühler durch mechanische Schalter (8a bis 8c) gebildet sind, die mechanisch durch zugeordnete, in ihrer Anordnung die Kodierung ergebende Betätigungsorgane (Fläche 10) der Elemente (5a bis 5e) bei deren Einsetzen selektiv schaltbar sind.

5. Modellhaus nach Anspruch 4, dadurch gekennzeichnet, daß jedes Element (5a bis 5e) in wenigstens einer seiner in der eingesetzten Stellung an einer Gegenfläche (11) der Umgrenzungswand (3) anliegenden Flächen (10) ein Muster von Vertiefungen oder Nuten (9) trägt, deren Tiefe den Schaltweg des zugeordneten mechanischen Schalters (8a bis 8c) übersteigt.

6. Modellhaus nach Anspruch 5, dadurch gekennzeichnet, daß die Nuten (9) in einer bei der Einsetzbewegung des Elements (5a bis 5e) an der Gegenfläche (11) gleitenden Fläche (10) des Elements (5a bis 5e) in dessen in Bewegungsrichtung (Pfeil 14) vorderen Bereich eingearbeitet sind und daß die zugeordneten Schalter (8a bis 8c) für ein sauberes Auflaufen von Schaltflächen (Fläche 10) des Elements (5a bis 5e) ausgebildet sind.

## Claims

1. A model house, particularly a vertically cut model house, comprising an enclosing wall (3), which includes the floor (3b), the wall (3c) and/or the roof (3a) and encloses the interior of the house and is adapted to have elements (5a to 5e) inserted into or attached to it which correspond to certain structural and/or insulating materials for demonstrating the total heat insulation and/or the fuel oil requirement, and sensors (8a to 8c), which are secured to the model and serve to indicate at least one parameter of the resulting heat insulation, characterized in that each element (5a to 5e) carries coding means (grooves 9) which correspond to the material to be represented and/or its arrangement and thickness and which during the attachment or insertion of the elements (5a to 5e) to or into the enclosing wall (3) adjacent to the floor (3b) the wall (3c) and/or the roof (3a) are adapted to be detected by the associated sensor (8a to 8c), and that the code information of the respective sonsors (8a to 8c) is adapted to be converted to an indication of at least one parameter of the combined total heat insulation which in dependence on the various structural and/or insulating materials or their arrangements is obtained in a natural house which is thus insulated.

2. A model house according to claim 1, characterized in that only elements (5a to 5e) in combinations which are useful in practice result in a combination code which has been preprogrammed in a read-only memory connected to the sensors (switches 8a to 8c) and in said memory initiates an indication of a precalculated fixed value for an associated parameter of the total heat insulation of the house.

3. A model house according to claim 2, characterized in that all other code combinations do not initiate an indication or initiate a zero or error indication.

4. A model house according to any of claims 1 to 3, characterized in that the sensors consist of mechanical switches (8a to 8c), which as the elements (5a to 5e) are inserted, are adapted to be mechanically switched in a selective manner by associated actuating means (surface 10) provided on the elements (5a to 5e) and arranged to form the code.

5. A model house according to claim 4, characterized in that each element (5a to 5e) carries a pattern of recesses or grooves (9) in at least one of its surfaces (10) which when the element is inserted engages an opposite surface (11) of the enclosing wall (3) and said recesses or grooves (9) have a depth in excess of the contact travel of the associated mechanical switch (8a to 8c).

6. A model house according to claim 5, characterized in that grooves (9) are formed in the element (5a to 5e) in a surface (10) thereof which slides on the opposite surface (11) as the element (5a to 5e) is inserted and in a portion thereof which is a leading portion with respect to the direction of movement (arrow 14) of the element, and the associated switches (8a to 8c) are designed to ensure a neat engagement by switch-actuating surfaces (surface 10) of the element (5a to 5e).

## Revendications

1. Maison modèle, surtout à coupe verticale avec une paroi de clôture (3) comprenant le sol (3b), la paroi (3c) et/ou le toit (3a) et renfermant l'intérieur de la maison, dans laquelle ou à laquelle les éléments (5a à 5e) correspondant à certains matériaux de construction et/ou d'isolation pour démontrer l'isolation thermique globale ou les besoins en mazout peuvent être attachés ou insérés, et avec des palpeurs (8a à 8c) montés fermement sur le modèle pour produire l'affichage d'au moins un paramètre de l'isolation thermique réalisée, caractérisée par le fait que chaque élément (5a à 5e) porte un codage (rainure 9) correspondant au matériau à représenter et/ou à la disposition et à l'épaisseur de celui-ci, qui lors du montage ou de l'insertion des éléments (5a à 5e) contre ou dans la paroi de clôture (3) au niveau du sol (3b), de la paroi (3c) et/ou du toit (3a) peut être palpé par des palpeurs associés et que les informations de codage des palpeurs respectifs (8a à 8c) peuvent être converties en affichage d'au moins un paramètre de l'isolation thermique globale combinée d'une maison naturelle isolée de la sorte, isolation thermique globale résultant des différents matériaux de construction et/ou d'isolation ou de la disposition de ceux-ci.

2. Maison modèle selon la revendication 1, caractérisée par le fait que seules les compositions des éléments (5a à 5e) significatives dans la pratique produisent un code combiné qui est programmé d'avance en une mémoire fixe connectée aux palpeurs (commutateurs 8a à 8c) et déclenche dans celle-ci l'affichage d'une valeur fixe calculée d'avance pour un paramètre représentatif de l'isolation thermique globale de la maison.

3. Maison modèle selon la revendication 2, caractérisée par le fait que tous les autres codes combinés ne déclenchent pas d'affichage ou un affichage zéro ou erreur.

4. Maison modèle selon l'une des revendications 1 à 3, caractérisée par le fait que les palpeurs sont formés par des commutateurs mécaniques (8a à 8c) qui lors du montage des éléments peuvent être actionnés mécaniquement et sélectivement par des organes de commande (surface 10) associés, disposés sur les éléments (5a à 5e) et produisant par leut disposition le codage.

5. Maison modèle selon la revendication 4, caractérisée par le fait que chaque élément (5a à 5e) porte, sur au moins une de ses surfaces (10) qui dans la position montée entre en contact avec une surface opposée (11) de la paroi de clôture (3), un dessin d'enfoncements ou de rainures (9) dont la profondeur dépasse la longueur de course du commutateur mécanique (8a à 8c) associé.

6. Maison modèle selon la revendication 5, caractérisée par le fait que les rainures (9) sont pratiquées dans une surface (10) de l'élément (5a à 5e) qui glisse contre la surface opposée (11) lors du montage des éléments (5a à 5e), dans une partie qui se situe à l'avant par rapport à la direction du mouvement (flèche 14) de l'élément, et que les commutateurs associés (8a à 8c) sont formés pour assurer un glissement impeccable des faces de communtation (surface 10) de l'élément (5a à 5e).

**Fig. 1**

k-Wert

$k_m = \boxed{0.57}\ \dfrac{W}{m^2 k}$

k-Wert-
Versuchshaus

Öl-Verbrauch

$\boxed{4\,142}$ Liter

0 032 250

# Fig.2